# EUROPEAN PATENT APPLICATION

(11) **EP 4 787 675 A1**
(43) Date of publication of application: **05.08.2026**
(21) Application number: 24871736.5
(22) Date of filing: 30.08.2024
(51) Int. Cl.: H02K 3/487, H02K 1/16, H02K 9/19

(54) **STATOR, ROTARY ELECTRIC MACHINE, AND METHOD FOR ASSEMBLING ROTARY ELECTRIC MACHINE**

(30) Priority: 28.09.2023 JP 2023167275
(71) Applicant: IHI Corporation, Tokyo 135-8710 (JP)
(72) Inventor: TERAUCHI, Tetsuyuki, Tokyo 135-8710 (JP)
(74) Representative: MERH-IP Matias Erny Reichl Hoffmann Patentanwälte PartG mbB
(86) International application number: PCT/JP2024/031345
(87) International publication number: WO 2025/069936

(57) **Abstract**

A stator provided on the outer periphery of a rotor includes: teeth (9) arranged in a circumferential direction around an axis; slots (11) formed between each pair of adjacent teeth (9) and having accommodation spaces for coils (10) wound around each tooth (9); and a wedge (18) inserted into each of opening portions (11a) of the slots (11) that open radially inward. The wedge (18) is formed in a plate shape capable of bending to reduce the width of the wedges (18) in the circumferential direction. The pairs of the teeth (9, 9) include side surfaces (15, 15) facing each other. The side surfaces (15, 15) have engagement portions (16, 16) that engage with both end portions (23, 23) of the wedge (18) in the circumferential direction and restrict radially inward movement of the wedge (18).

## Description

### TECHNICAL FIELD

The present disclosure relates to a stator for a rotary electric machine, a rotary electric machine equipped with the stator, and a method for assembling the rotary electric machine.

### BACKGROUND ART

Patent Literature 1 discloses a coil insertion device. This device uses rod-shaped blades to insert coils into slots of a stator, and then uses a wedge pusher to insert wedges into the slots. Both the coils and wedges are inserted into the slots from the axial direction of the stator. The wedges inserted into the slots are positioned to close the opening portions of the slots that open radially inward. The wedges prevent the coils from moving out from these opening portions and provide electrical insulation between the coils and the stator.

### CITATION LIST

### PATENT LITERATURE

Patent Literature 1: JP 2015-204647 A

### SUMMARY OF THE INVENTION

### TECHNICAL PROBLEM

As described above, wedges are inserted into slots from the axial direction of the stator. At this time, components such as coils are already inserted in the slots, and the remaining space in the slots is relatively narrow. Therefore, when inserting wedges into such narrow spaces, the wedges are prone to rubbing against the components, raising concerns about abrasion of the components.

The present disclosure has been made in view of such circumstances, and the object thereof is to provide a stator for a rotary electric machine that can facilitate the installation of wedges in slots, a rotary electric machine equipped with such a stator, and a method for assembling such a rotary electric machine.

### TECHNICAL SOLUTION

A stator according to the first aspect of the present disclosure for a rotary electric machine provided on an outer periphery of a rotor, includes: teeth arranged in a circumferential direction around an axis; slots formed between each pair of the adjacent teeth and each having an accommodation space for coils wound around each tooth; and a wedge inserted into each of opening portions of the slots that open radially inward, wherein the wedge is formed in a plate shape capable of bending to reduce a width of the wedge in the circumferential direction, the pairs of the teeth include side surfaces facing each other, and the side surfaces have engagement portions that engage with both end portions of the wedge in the circumferential direction and restrict radially inward movement of the wedge.

The stator may further include a seal member provided radially outward from the wedge in each of the slots and contacting the side surfaces of the paired teeth. The stator may further include a reinforcement portion supported by the seal member and facing the accommodation space for the coils. The reinforcement portion may have at least one groove formed therein that opens toward the accommodation space for the coils and extends in a direction parallel to the axis. The wedge may include a pair of side portions extending such that the distance therebetween increases toward the radially inward direction, and the seal member may include a main body portion facing the accommodation space and a pair of leg portions extending from the main body portion and positioned between the side surfaces of the paired teeth and the pair of side portions.

A rotary electric machine according to the second aspect of the present disclosure includes the stator according to the first aspect.

A method according to the third aspect of the present disclosure for assembling a rotary electric machine, which includes a stator provided on an outer periphery of a rotor and including teeth arranged in a circumferential direction around an axis and slots formed between each pair of the adjacent teeth and each having an accommodation space for coils wound around each tooth, the method includes: inserting a seal member and a reinforcement portion into each of the slots from the axial direction with coils accommodated in the slots; and inserting a wedge into each of opening portions of the slots that open radially inward from a radially inner side of the opening portions.

### EFFECT OF THE INVENTION

According to the present disclosure, it is possible to provide a stator for a rotary electric machine that can facilitate the installation of wedges in slots, a rotary electric machine equipped with such a stator, and a method for assembling a rotary electric machine.

### BRIEF DESCRIPTION OF THE DRAWINGS

FIG.1 is a diagram illustrating an example of a rotary electric machine according to an embodiment of the present disclosure.
FIG.2 is a partially enlarged view of a stator as viewed from the axial direction.
FIG.3 is a diagram illustrating tip portions of teeth and their surroundings as viewed from the axial direction.
FIG.4 is a diagram of wedges as viewed from the axial direction.
FIG.5A is a diagram of a seal member and reinforcement portion as viewed from the axial direction.
FIG.5B is a diagram of a modified example of the seal member as viewed from the axial direction.
FIG.6A is one of the diagrams illustrating the stepwise installation of wedges, seal member, and reinforcement portion into slots.
FIG.6B is one of the diagrams illustrating the stepwise installation of wedges, seal member, and reinforcement portion into slots.
FIG.6C is one of the diagrams illustrating the stepwise installation of wedges, seal member, and reinforcement portion into slots.

### DESCRIPTION OF EMBODIMENTS

Hereinafter, embodiments of the present disclosure will be described using drawings. In each drawing, common parts are given the same reference numerals, and duplicate explanations are omitted.

First, the rotary electric machine 1 according to the present embodiment will be described. For convenience of explanation, the extension direction of an axis 2 is defined as axial direction AD. The axis 2 is a rotation center axis of a shaft 5 and a rotor 3, and a center axis of teeth 9 arranged radially. Also, a circumferential direction CD and a radial direction RD are defined around axis 2. Note that "width" means a length between two points in the circumferential direction CD (or its tangential direction).

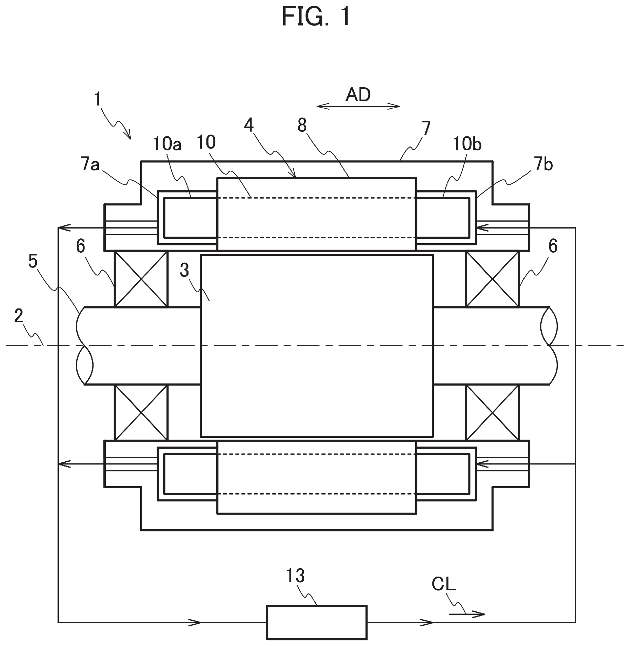

FIG.1 is a diagram illustrating an example of rotary electric machine 1 according to the present embodiment. The rotary electric machine 1 is a generator or motor. The rotary electric machine 1 includes a rotor 3 and a stator 4 provided on the outer periphery of the rotor 3. The rotor 3 is attached to the shaft 5 extending in the axial direction AD. The rotor 3, the stator 4, and the shaft 5 are arranged concentrically with reference to the axis 2. The shaft 5 is rotatably supported by bearings 6, 6. The bearings 6, 6 are attached to a housing 7.

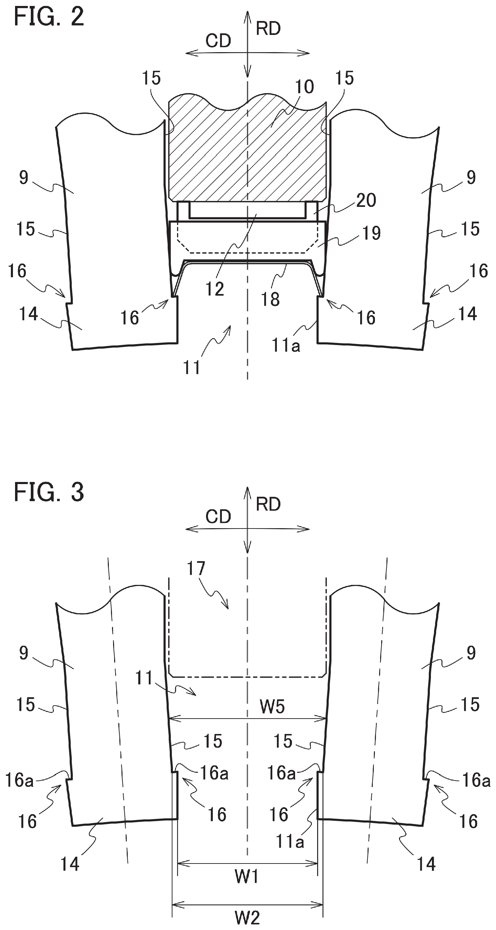

The stator 4 includes a core (yoke) 8 supported by the housing 7, teeth (magnetic poles) 9 (see FIG.2) extending radially inward from the core 8, and coils 10 wound around each of the teeth 9.

The coils 10 are accommodated in slots 11 (see FIG.2) formed between the teeth 9, 9. Parts of the coils 10 are folded back and exposed as coil ends 10a, 10b from both sides of the core 8 in the axial direction AD.

The housing 7 has accommodation chambers 7a, 7b for each of the coil ends 10a, 10b. The coil end 10a is accommodated in the accommodation chamber 7a. The coil end 10b is accommodated in the accommodation chamber 7b. The accommodation chamber 7a and the accommodation chamber 7b communicate with each other through a flow path 12 (see FIG.2) formed in the slot 11.

The rotary electric machine 1 according to the present embodiment is cooled by a cooling device 13 using refrigerant CL. The cooling device 13 includes a pump (not shown) that pressure-feeds refrigerant CL to the rotary electric machine 1, a heat exchanger that cools the refrigerant CL, a valve that controls the supply amount of the refrigerant CL, and the like. The refrigerant CL is a liquid such as lubricating oil or insulating oil.

As shown in FIG.1, the cooling device 13 supplies the refrigerant CL to the accommodation chamber 7a. The refrigerant CL supplied to the accommodation chamber 7a flows into the accommodation chamber 7b through the flow path 12 (see FIG.2). Thereafter, the refrigerant CL returns to the cooling device 13. By the flow from the accommodation chamber 7a to the accommodation chamber 7b, the refrigerant CL cools at least the coil 10. The temperature of the refrigerant rises due to heat exchange accompanying this cooling. The high-temperature refrigerant is cooled by the heat exchanger in the cooling device 13 and supplied to the accommodation chamber 7a again.

Next, the stator 4 according to the present embodiment will be described. FIG.2 is a partially enlarged view of the stator 4 as viewed from the axial direction AD. FIG.2 illustrates the surroundings of the tip portions 14 of the teeth 9. FIG.3 is a diagram illustrating the tip portions 14 of the teeth 9 and its surroundings as viewed from the axial direction AD. As shown in FIG.2, the stator 4 includes the teeth 9 and the slots 11.

The teeth 9 are so-called magnetic poles. The teeth 9 extend radially inward from the core 8 with a predetermined length and are arranged in the circumferential direction CD. Among the teeth 9, each pair of the adjacent teeth 9 forms the slot 11 between the pair.

As shown in FIGs. 2 and 3, the tooth 9 has side surfaces 15, 15. The side surfaces 15, 15 are formed on both sides of the tooth 9 in the circumferential direction CD and also serve as inner surfaces of the slots 11. Each side surface 15 has an engagement portion 16 at the position where an opening portion 11a of the slot 11 is formed. That is, adjacent (paired) teeth 9, 9 include the side surfaces 15, 15 facing each other, and each side surface 15 has the engagement portion 16.

The engagement portion 16 restricts radially inward movement of a wedge 18. Therefore, for example, the engagement portion 16 has a contact surface 16a. The contact surface 16a is a narrow flat surface that faces radially outward and extends in the axial direction AD. The contact surface 16a intersects the side surface 15 at a predetermined angle (e.g., 90°) and forms a step on the side surface 15. This step makes a width W1 of the opening portion 11a of the slot 11 narrower than a width W2 of the slot 11 at its depth (i.e., at a position radially outward from the opening portion 11a). Therefore, the width of the tooth 9 becomes wider radially inward than radially outward, with the step formed by the contact surface 16a as the boundary.

The slot 11 has an accommodation space 17 for the coil 10 wound around each tooth 9. Also, the slot 11 has an opening portion 11a that opens radially inward. The tip portions 14, 14 of the adjacent teeth 9, 9 are separated from each other along the circumferential direction CD, thereby forming the opening portion 11a. The opening portion 11a functions as an insertion opening for the wedge 18.

The stator 4 further includes the wedge 18, a seal member 19, and a reinforcement portion 20. Among these three members, the wedge 18 is positioned most radially inward. The seal member 19 and the reinforcement portion 20 are positioned between the coil 10 and the wedge 18. The seal member 19 and the reinforcement portion 20 are inserted into the slot 11 from the axial direction AD, for example. On the other hand, the wedge 18 is inserted into the slot 11 from the radial direction RD. That is, the wedge 18 is inserted into the inside of slot 11 through the opening portion 11a and prevents the coil 10, the seal member 19, and the reinforcement portion 20 from moving out radially inward.

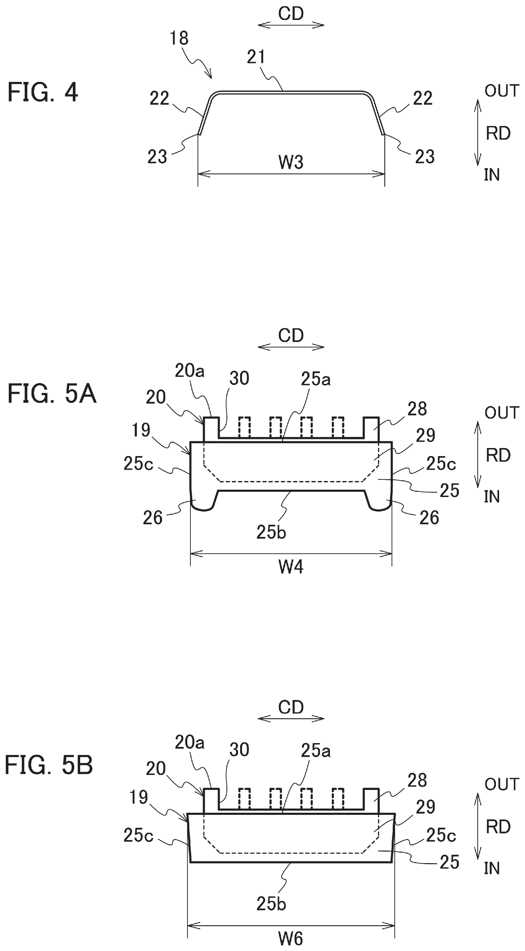

FIG.4 is a diagram of the wedge 18 as viewed from the axial direction AD. The wedge 18 is a metal plate-shaped member extending in the axial direction AD. Therefore, compared to conventional resin wedges, high mechanical strength and heat resistance can be obtained. Also, as described later, since the thickness is relatively thin, eddy current loss can also be suppressed. Such wedge 18 is inserted into the opening portion 11a of the slot 11 to close the opening portion 11a.
However, the material of the wedge 18 is not limited to metal as long as it satisfies the above requirements.

The wedge 18 has a cross-sectional shape curved radially outward. For example, the wedge 18 includes an intermediate portion 21 formed in a planar shape and a pair of side portions 22, 22. Each side portion 22 includes an end portion (edge portion) 23 of the wedge 18. The pair of side portions 22, 22 are provided on both sides of the intermediate portion 21 in the circumferential direction CD. They extend such that their spacing increases toward the radially inward direction. In this case, the wedge 18 has a substantially U-shaped cross-section opening radially inward as a whole.

The thickness of the wedge 18 is set to a value that allows bending to reduce the width of the wedge 18 (e.g., 0.3 mm). When stress is applied to the wedge 18 to reduce the width of the wedge 18, the actual bending part depends on the cross-sectional shape or dimensions of the wedge 18. For example, when the wedge 18 includes the intermediate portion 21 and the pair of side portions 22, 22 shown in FIG.4, the entire wedge 18 may be bent, or one of the intermediate portion 21 and the pair of side portions 22, 22 may be bent. Alternatively, like a hinge, the connection portions between intermediate portion 21 and each side portion 22 may be bent more than other portions.

The intermediate portion 21 is substantially perpendicular to the radial direction and extends in the axial direction. The pair of side portions 22, 22 also extend such that the distance between them increases toward the radially inward direction. The intermediate portion 21 and each side surface 15 are both formed in planar shapes.

The cross-sectional shape of the wedge 18 is not limited to the substantially U-shaped form. For example, the cross-sectional shape of the wedge 18 may be a shape curved radially outward as a whole. In any case, the pair of end portions 23, 23 engage with engagement portions 16, and radially inward movement of the wedge 18 is restricted.

A width W3 of the wedge 18 in a state not be applied to external force (i.e., not bending) is slightly larger than the width W1 of the opening portion 11a of the slot 11 (see FIG.3). For example, the width W3 of the wedge 18 is slightly larger than a width between the contact surfaces 16a, 16a provided on the side surfaces 15, 15 facing each other through the slot 11 among the adjacent teeth 9, 9. However, the wedge 18 can be bent such that the width W3 becomes smaller than the width W1 of the opening portion 11a.

FIG.5A is a diagram of the seal member 19 and the reinforcement portion 20 as viewed from the axial direction AD. The seal member 19 is provided radially outward from the wedge 18 in the slot 11. Also, the seal member 19 contacts the side surfaces 15, 15 of the adjacent (i.e., the paired) teeth 9, 9.

The seal member 19 is an elastic member extending in the axial direction AD. The seal member 19 is formed of an elastomer such as fluorine rubber. As shown in FIG.5A, the seal member 19 includes a main body portion 25 and a pair of leg portions 26, 26. The main body portion 25 is provided at a position facing the accommodation space 17 for the coil 10 (see FIG.3). On the other hand, the pair of leg portions 26, 26 are provided at positions facing the wedge 18.

The main body portion 25 has a substantially rectangular cross-section. The main body portion 25 has an upper surface 25a facing radially outward, a lower surface 25b facing radially inward, and two side surfaces 25c, 25c connecting both ends of the upper surface 25a and the lower surface 25b in the circumferential direction CD. The maximum width between the two side surfaces 25c, 25c defines a width W4 (or W6) of the seal member 19.

When the seal member 19 is installed in the slot 11, the upper surface 25a of the main body portion 25 faces the coil 10, and the lower surface 25b of the main body portion 25 faces the wedge 18 (e.g., the intermediate portion 21). Also, the two side surfaces 25c, 25c of the main body portion 25 respectively face the side surface 15 of the corresponding tooth 9.

The pair of leg portions 26, 26 are formed integrally with main body portion 25. The pair of leg portions 26, 26 extend from portions on both sides of main body portion 25 in circumferential direction CD toward wedge 18. The pair of leg portions 26, 26 are positioned between side surfaces 15, 15 of adjacent (i.e., paired) teeth 9, 9 and the pair of side portions 22, 22 of wedge 18.

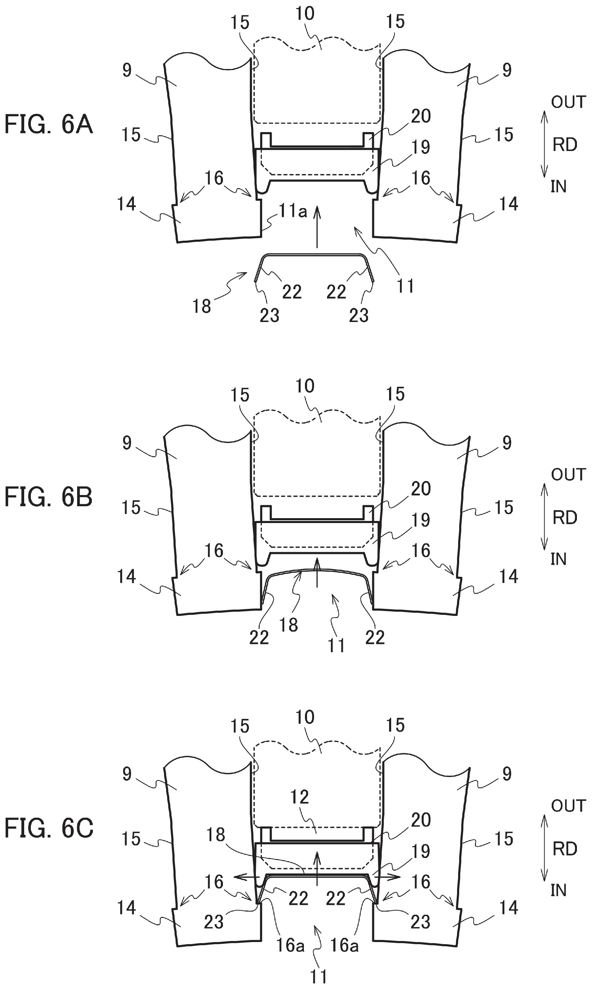

The width W4 of the seal member 19 is slightly smaller than the width W5 of the slot 11 (see FIG.2) at the location where the seal member 19 can be positioned. Therefore, the seal member 19 can move in the radial direction RD and the axial direction AD within the slot 11. That is, the seal member 19 is inserted at a position away from the coil 10 in the slot 11 without being interfered with by the side surface 15 of the tooth 9 (see FIG.6A).

However, as described later, the pair of leg portions 26, 26 are pressed toward the side surfaces 15, 15 of the adjacent (i.e., paired) teeth 9, 9 by the pair of side portions 22, 22 of the wedge 18. By this pressing, the pair of leg portions 26, 26 elastically deform, and the seal member 19 comes into firm contact with each side surface 15. As a result, the accommodation space 17 for the coil 10 communicates with the accommodation chamber 7a and the accommodation chamber 7b in a state where it is surrounded without gaps with the inner surface of the slot 11 and the seal member 19 on a cross-section perpendicular to the axial direction AD (i.e., it becomes a closed region). That is, this space functions as the flow path 12 for the refrigerant CL, and the refrigerant CL flowing through the flow path 12 cools at least the coil 10.

FIG.5B is a diagram of a modified example of the seal member 19 as viewed from the axial direction AD. The seal member 19 shown in FIG.5B does not have the pair of leg portions 26, 26. Instead, a width (the maximum width) W6 of the seal member 19 is larger than width W5 of the slot 11 at the position where the seal member 19 is installed.

As described above, the seal member 19 has elasticity. Therefore, when the seal member 19 is inserted into the slot 11, at least part of the side surface 15 of the seal member 19 contacts with the side surface 15 of the corresponding tooth 9. When installing the seal member 19 in the slot 11, for example, a jig (not shown) having a pair of blades is used. The pair of blades sandwich the side surfaces 15, 15 of the seal member 19 and reduce the width W6 to be smaller than width W5. While maintaining this state, the seal member 19 is inserted into the slot 11 together with the pair of blades, and then only the pair of blades retreat from the slot 11. Through such operation, the seal member 19 can be installed in the slot 11.

The reinforcement portion 20 is a rectangular bar-shaped member and is supported by the seal member 19. The reinforcement portion 20 includes an exposed portion 28 exposed from the seal member 19 to the accommodation space 17, and a root portion 29 embedded in the seal member 19. The exposed portion 28 has an upper surface 20a facing the accommodation space 17 for the coil 10.

The reinforcement portion 20 is formed of a material that has higher hardness than the seal member 19 and has neither magnetic nor conductive properties. Such a material is, for example, ceramic. The reinforcement portion 20 adheres to the seal member 19 and suppresses excessive deformation of the seal member 19. For example, when the seal member 19 is fluorine rubber, the seal member 19 is adhered to the reinforcement portion 20 by vulcanization bonding.

When the refrigerant CL flows through the flow path 12, the pressure in the flow path 12 rises due to the pump (not shown) of the cooling device 13. On the other hand, the reinforcement portion 20 is provided at a position facing the flow path 12. Therefore, the reinforcement portion 20 receives the pressure in the flow path 12 that would otherwise be received by the seal member 19, thereby suppressing excessive deformation of the seal member 19.

The reinforcement portion 20 may have at least one groove 30 formed therein that opens toward the accommodation space 17 for the coil 10 and extends in axial direction AD. For example, as shown in FIG.5A, one groove 30 is formed in the exposed portion 28.

As described above, the flow path 12 for the refrigerant CL is formed between the seal member 19 and the coil 10. When at least one groove 30 is formed in the reinforcement portion 20, it is possible to provide the flow path 12 by the presence of groove 30 even if the distance between the seal member 19 and the coil 10 can only secure a value about the thickness of the exposed portion 28. For example, even if the upper surface 20a of the reinforcement portion 20 is in contact with the coil 10, the flow path 12 can be secured.

As shown by broken lines in FIG.5A, the groove 30 may be divided into grooves extending parallel to each other. In this case, the contact area of the reinforcement portion 20 with the refrigerant CL increases, and the heat dissipation efficiency of the reinforcement portion 20 can be promoted.

Next, the assembly method according to the present embodiment will be described. Specifically, the installation of the wedge 18, the seal member 19, and the reinforcement portion 20 into the slot 11 will be described. FIGs. 6A to 6C are diagrams illustrating the stepwise installation of these members into the slot 11. Note that the wedge shown in these figures applies the wedge 18 shown in FIG.4, and the seal member applies the seal member 19 shown in FIG.5A. Also, it is assumed that the coil 10 is accommodated in advance in the accommodation space 17 (see FIG.3).

First, the seal member 19 and the reinforcement portion 20 are inserted into the slot 11 from the axial direction AD. The width W4 of the seal member 19 (see FIG.5A) is smaller than the width W5 of the slot 11 (see FIG.2). Therefore, as shown in FIG.6A, the seal member 19 and the reinforcement portion 20 are inserted at a location sufficiently away from the coil 10 in the slot 11.

Next, the wedge 18 is inserted into the opening portion 11a of the slot 11 from the radially inner side of the opening portion 11a. The width W3 of the wedge 18 (see FIG.4) is larger than the width W1 of the opening portion 11a of the slot 11 (see FIG.3). Therefore, as shown in FIG.6B, the wedge 18 is bent radially outward so that its width W3 is reduced until the end portion 23 of the wedge 18 reaches the engagement portion 16.

By inserting the wedge 18 into the opening portion, the wedge 18 contacts with the lower surface 25b of the seal member 19 and the seal member 19 and the reinforcement portion 20 approach to the coil 10. When the insertion of the wedge 18 proceeds further, the end portions 23 of the wedge 18 reaches the engagement portions 16. When the end portions 23 of the wedge 18 reaches the engagement portion 16, for example, when the end portions 23 of the wedge 18 pass through the contact surfaces 16a, the pair of side portions 22, 22 of the wedge 18 slightly open due to the elastic force of the wedge 18 (see FIG.6C). As a result, the contact surfaces 16a come to a state where they can contact the end portions 23 of the wedge 18 from the radially inner side, and radially inward movement of the wedge 18 is restricted. In addition, for example, the opening portion 11a is closed by wedge 18. In this way, the wedge 18 can be easily installed in the slot 11 while avoiding unnecessary collisions with other members.

On the other hand, the distance between the wedge 18 engaged with the engagement portions 16 and the coil 10 is substantially equal to the sum of the thicknesses of the main body portion 25 and the exposed portion 28 of the reinforcement portion 20 along the radial direction RD. Therefore, when the wedge 18 engages with the engagement portions 16, the pair of leg portions 26, 26 are pressed toward the side surfaces 15, 15 of the adjacent (i.e., paired) teeth 9, 9 by the pair of side portions 22, 22 of the wedge 18.

By this pressing, the pair of leg portions 26, 26 elastically deform, and the seal member 19 and the seal member 19 comes into firm contact with each side surface 15. As a result, the accommodation space 17 for the coil 10 communicates with the accommodation chamber 7a and the accommodation chamber 7b in a state where it is surrounded without gaps by the inner surface of the slot 11 and the seal member 19 on a cross-section perpendicular to the axial direction AD (i.e., it becomes a closed region). That is, this space functions as the flow path 12 for the refrigerant CL.

During the refrigerant CL flows through the flow path 12, the pressure in the flow path 12 rises due to the pump (not shown) of the cooling device 13. Therefore, the seal member 19 receives this pressure and may move radially inward. However, the wedge 18 is provided radially inward of the seal member 19. Even when the seal member 19 moves radially inward, the lower surface 25b of the seal member 19 contacts the wedge 18. On the other hand, the wedge 18 is restricted from moving radially inward by engagement with the engagement portion 16. Therefore, the seal member 19 is supported by wedge 18, and it is possible to prevent the seal member 19 from coming off the slot 11.

The reinforcement portion 20 may be omitted depending on the pressure in the flow path 12 or the hardness of the seal member 19, etc. When sealing by the seal member 19 is unnecessary, or when the refrigerant CL becomes unnecessary, the reinforcement portion 20 and the seal member 19 may be omitted. In this case, the cooling device 13 in FIG.1 also becomes unnecessary. Even in this case, the wedge 18 prevents components such as the coil 10 from moving out. Since the wedge 18 is inserted from the opening portion 11a of the slot 11, it is possible to prevent the occurrence of the coil abrasion that is a concern when the wedges are inserted into the slots from the axial direction.

The present disclosure is not limited to the above embodiment, but is indicated by the description of the claims, and further includes all changes within the meaning and scope equivalent to the description of the claims.

## Claims

1. A stator for a rotary electric machine provided on an outer periphery of a rotor, comprising:
teeth arranged in a circumferential direction around an axis;
slots formed between each pair of the adjacent teeth and each having an accommodation space for coils wound around each tooth; and
a wedge inserted into each of opening portions of the slots that open radially inward, wherein
the wedge is formed in a plate shape capable of bending to reduce a width of the wedge in the circumferential direction,
the paired teeth include side surfaces facing each other, and
the side surfaces have engagement portions that engage with both end portions of the wedge in the circumferential direction and restrict radially inward movement of the wedge.

2. The stator according to claim 1, further comprising
a seal member provided radially outward from the wedge in each of the slots and contacting the side surfaces of the paired teeth.

3. The stator according to claim 2, further comprising
a reinforcement portion supported by the seal member and facing the accommodation space for the coils.

4. The stator according to claim 3, wherein
the reinforcement portion has at least one groove formed therein that opens toward the accommodation space for the coils and extends in a direction parallel to the axis.

5. The stator according to claim 2, wherein
the wedge includes a pair of side portions extending such that a distance therebetween increases toward the radially inward direction, and
the seal member includes a main body portion facing the accommodation space and a pair of leg portions extending from the main body portion and positioned between the side surfaces of the paired teeth and the pair of side portions.

6. A rotary electric machine comprising the stator according to any one of claims 1 to 5.

7. A method for assembling a rotary electric machine comprising a stator provided on an outer periphery of a rotor and including teeth arranged in a circumferential direction around an axis and slots formed between each pair of the adjacent teeth and each having an accommodation space for coils wound around each tooth, the method comprising:
inserting a seal member and a reinforcement portion into each of the slots from the axial direction with coils accommodated in the slots; and
inserting a wedge into each of opening portions of the slots that open radially inward from a radially inner side of the opening portions.

## Amended claims

### Amended claims under Art. 19.1 PCT

1. A stator for a rotary electric machine provided on an outer periphery of a rotor, comprising:
teeth arranged in a circumferential direction around an axis;
slots formed between each pair of the adjacent teeth and each having an accommodation space for coils wound around each tooth; and
a wedge inserted into each of opening portions of the slots that open radially inward;
a seal member provided radially outward from the wedge in each of the slots and contacting the side surfaces of the paired teeth; and
a reinforcement portion supported by the seal member and facing the accommodation space for the coils; wherein
the wedge is formed in a plate shape capable of bending to reduce a width of the wedge in the circumferential direction,
the paired teeth include side surfaces facing each other,
the side surfaces have engagement portions that engage with both end portions of the wedge in the circumferential direction and restrict radially inward movement of the wedge, and
the reinforcement portion has at least one groove formed therein that opens toward the accommodation space for the coils and extends in a direction parallel to the axis.

2. The stator according to claim 1, wherein
the wedge includes a pair of side portions extending such that a distance therebetween increases toward the radially inward direction, and
the seal member includes a main body portion facing the accommodation space and a pair of leg portions extending from the main body portion and positioned between the side surfaces of the paired teeth and the pair of side portions.

3. A rotary electric machine comprising the stator according to claim 1 or 2.
